(19) Europäisches Patentamt / European Patent Office / Office européen des brevets

(11) **EP 2 504 649 B1**

(12) **FASCICULE DE BREVET EUROPEEN**

(45) Date de publication et mention de la délivrance du brevet:
**02.04.2014 Bulletin 2014/14**

(21) Numéro de dépôt: **10790478.1**

(22) Date de dépôt: **19.11.2010**

(51) Int Cl.:
*F26B 23/00* (2006.01)   *F26B 25/22* (2006.01)

(86) Numéro de dépôt international:
**PCT/IB2010/055304**

(87) Numéro de publication internationale:
**WO 2011/061715 (26.05.2011 Gazette 2011/21)**

(54) **PROCÉDÉ ET INSTALLATION DE SECHAGE DE MATIERES PÂTEUSES, EN PARTICULIER DE BOUES DE STATIONS D'ÉPURATION**

VERFAHREN UND ANLAGE ZUR TROCKNUNG VON SCHLAMMARTIGEN MATERIALIEN, IM BESONDEREN SCHLAMM AUS KLÄRANLAGEN

METHOD AND FACILITY FOR DRYING SLURRY-LIKE MATERIALS, IN PARTICULAR SLUDGE FROM WASTEWATER TREATMENT PLANTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2009 FR 0905607**

(43) Date de publication de la demande:
**03.10.2012 Bulletin 2012/40**

(73) Titulaire: **Degrémont**
**92040 Paris La Défense (FR)**

(72) Inventeur: **PARDO, Pierre Emmanuel**
**F-91400 Orsay (FR)**

(74) Mandataire: **Michardière, Bernard**
**Cabinet Armengaud Aîné**
**3, Avenue Bugeaud**
**75116 Paris (FR)**

(56) Documents cités:
EP-B1- 0 781 741    DE-A1- 4 138 865
DE-A1- 4 205 619    US-A- 5 323 546

**EP 2 504 649 B1**

**Description**

La présente invention concerne un procédé de séchage thermique de matières pâteuses, en particulier de boues provenant notamment de stations d'épuration d'eaux résiduaires, à très basse consommation énergétique thermique.

La présente invention peut être utilisée pour le séchage de tout système pâteux que l'on souhaite sécher et qui peut, sous une forme pré-séchée, être mis sous forme de cordons semblables à des spaghettis.

On connait bien la technique du séchage thermique des boues provenant des stations d'eaux résiduaires urbaines : il existe différentes technologies permettant d'obtenir un produit fini dont la siccité finale est égale ou supérieure à 85%.

Le principal reproche du séchage thermique est celui de la trop forte dépense énergétique nécessaire à ce séchage et donc des coûts d'exploitation qui s'en découlent.

C'est pourquoi, dans certains procédés de séchage à bandes, le séchage thermique peut, pour sécher les boues, récupérer des calories à basse température (50-90°C), chaleur fatale et donc non utilisée d'un autre process (cogénération, condensation de turbine, pompe à chaleur, système solaire thermique, chaudière biogaz....). Cependant cette chaleur fatale n'est en général pas suffisante pour sécher totalement les boues. Il en résulte une consommation énergétique importante.

De plus ces technologies de séchage à bandes basse température ne sont pas utilisables pour sécher des boues qui ne sont pas assez déshydratées en amont car on ne peut pas étaler correctement un tapis de spaghettis sur le sécheur.

Dans d'autres procédés, le séchage thermique récupère de la chaleur du process de séchage lui-même mais ce bouclage n'est pas optimisé énergétiquement.

Les sécheurs existant actuellement ont une énergie nécessaire au séchage de la boue d'environ 900-1100 kWh/TEE (Tonne d'Eau Evaporée). Ces sécheurs peuvent être des sécheurs directs, selon lesquels le fluide chaud de séchage, en général un gaz, est directement en contact avec les boues à sécher, ou indirects, selon lesquels le fluide chaud de séchage, gaz ou liquide, transmet sa chaleur aux boues à travers une paroi.

La siccité d'une boue peut être définie comme le rapport de la masse de matières sèches (MS) à la masse totale de la boue (MS + eau) soit : $MS/ (MS + H_2O)$.

Le brevet EP 0 781 741 B1 divulgue un procédé de séchage de produits pâteux, en particulier de boues de stations d'épuration, du genre comprenant :

- un premier étage de séchage (séchage indirect) qui reçoit des boues ayant une siccité Se à l'entrée, et délivre en sortie des boues ayant une siccité intermédiaire Si ;
- une étape de formage des boues en cordons à la sortie du premier étage,
- et un deuxième étage de séchage direct des cordons de boues à l'aide d'un gaz chaud donnant en sortie un produit ayant une siccité finale Sf.

De tels procédés de séchage et systèmes de sécheurs avec pré-évaporation des boues peuvent obtenir des consommations de 700-800 kWh/TEE. Cette consommation énergétique est optimisée par rapport aux sécheurs évoqués au début car une réutilisation d'une partie de l'énergie utilisée dans le premier étage est injectée dans le deuxième étage pour le séchage de ce dernier. Cependant, selon le brevet EP 0781 741 B1, au vu des conditions de siccité en sortie de pré-évaporation (40-60%) et des conditions de température utilisée dans le sécheur (120°C), les bouclages énergétiques ne sont pas optimisés.

La présente invention se propose d'apporter une solution énergétique au séchage des boues en optimisant le procédé et la régulation sur la consommation énergétique et en s'adaptant à l'utilisation non constante d'une énergie externe à basse température (50-90°C).

L'objet de cette invention est ainsi de fournir un procédé de séchage de produits pâteux du genre défini précédemment dans lequel la consommation énergétique est minimisée.

Selon l'invention, un procédé de séchage de matières pâteuses, en particulier de boues de stations d'épuration, comprenant deux étages de séchage, à savoir :

- un premier étage de séchage de type indirect alimenté en fluide chaud, qui reçoit des boues ayant une siccité Se à l'entrée, et délivre en sortie des boues ayant une siccité intermédiaire Si et de la vapeur d'eau qui est dirigée vers un condenseur (8) pour y réchauffer une boucle de fluide de chauffage, notamment de l'eau ;
- une étape de formage des boues en cordons à la sortie du premier étage,
- et le deuxième étage de séchage des cordons de boues, chauffées de manière directe à l'aide d'un gaz, lui-même chauffé par la boucle de fluide de chauffage, ce deuxième étage donnant en sortie un produit ayant une siccité finale Sf,

2

est caractérisé en ce que la siccité intermédiaire Si est pilotée en fonction de la siccité d'entrée mesurée Se et de la siccité de sortie Sf voulue, pour une consommation minimale de l'énergie globale utilisée pour le séchage, le débit, la pression et/ou la température du fluide chaud alimentant le premier étage de séchage étant ajusté en conséquence.

De préférence, le procédé consiste à piloter la siccité sortie pré-évaporation, ou siccité intermédiaire, de telle sorte que la chaleur récupérée du premier étage d'évaporation soit nécessaire et suffisante au séchage du deuxième étage.

De préférence, on détermine la siccité intermédiaire Si, pour une consommation minimale de l'énergie globale, à partir de la mesure de la siccité d'entrée Se, de la siccité de sortie Sf voulue, et de paramètres comprenant un coefficient $\alpha$ spécifique du condenseur, un coefficient $\beta$ spécifique du deuxième étage de séchage, et le cas échéant une chaleur gratuite apportée $Q_0$. La siccité intermédiaire Si peut être pilotée de telle sorte que la chaleur récupérée du premier étage à travers le condenseur soit nécessaire et suffisante au séchage du deuxième étage.

Avantageusement, on utilise une boucle de chaleur à basse température, en particulier comprise entre 30°C et 90°C, pour le chauffage du deuxième étage, comportant un liquide, en particulier de l'eau, mis en circulation selon un circuit fermé, traversant le condenseur pour y récupérer la chaleur de la vapeur condensée, et un échangeur de chaleur liquide/gaz pour chauffer le gaz du deuxième étage de séchage.

La boucle de chaleur à basse température peut comporter un échangeur entre le liquide de la boucle et une dérivation de fluide thermique du premier étage de séchage. La boucle de chaleur à basse température peut aussi comporter un échangeur de chaleur pour chauffer le liquide de la boucle par récupération d'énergie à basse température fatale ou bon marché.

L'invention concerne également une installation pour la mise en oeuvre du procédé défini précédemment, comprenant :

- un premier sécheur alimenté en fluide chaud, qui reçoit des boues ayant une siccité Se à l'entrée, et délivre en sortie des boues ayant une siccité intermédiaire Si, et de la vapeur d'eau qui est dirigée vers un condenseur pour y réchauffer un fluide de chauffage pour un deuxième sécheur;
- un dispositif de formage des boues en cordons à la sortie du premier sécheur,
- et le deuxième sécheur des cordons de boues à l'aide d'un gaz, notamment de l'air, chauffé au moins en partie par la chaleur extraite du condenseur, par l'intermédiaire du fluide de chauffage, ce deuxième sécheur donnant en sortie un produit ayant une siccité finale Sf,

  laquelle installation est caractérisée en ce qu'elle comporte des moyens pour piloter la siccité intermédiaire Si en fonction de la siccité d'entrée mesurée Se et de la siccité de sortie Sf voulue, pour une consommation minimale de l'énergie globale utilisée pour le séchage, le débit, la pression et/ou la température du fluide chaud alimentant le premier étage de séchage étant ajusté en conséquence.

De préférence, l'installation comporte une boucle de chaleur à basse température, en particulier comprise entre 30°C et 90°C, pour le chauffage du deuxième étage, comportant un liquide, en particulier de l'eau, mis en circulation selon un circuit fermé, traversant le condenseur pour y récupérer la chaleur de la vapeur condensée, et un échangeur de chaleur liquide/gaz pour chauffer le gaz du deuxième étage de séchage.

Avantageusement, l'installation comporte un ventilateur à vitesse réglable, dont l'aspiration est reliée à la sortie de vapeur et gaz du premier sécheur et dont le refoulement est relié au condenseur, la vitesse du ventilateur étant commandée pour maintenir une dépression faible (de l'ordre de quelques mbar) et contrôlée dans le premier sécheur.

Le transfert des boues entre la sortie du premier sécheur et le dispositif (5) de formage à l'entrée du deuxième sécheur peut être assuré par une vis sans âme régulée en vitesse, permettant d'assurer l'étanchéité au gaz en sortie du premier sécheur.

La boucle basse température à circulation de liquide de l'installation peut comprendre :

- une partie à température basse comprise entre 30-80°C, de préférence entre 60-70°C, en amont du condenseur,
- une partie moyenne température comprise entre 40-90°C, de préférence entre 70-80°C, en sortie du condenseur;
- un échangeur de chaleur entre le liquide de la boucle et une source d'énergie gratuite, en aval ou en amont du condenseur, pour réchauffer le liquide de la boucle par une source d'énergie basse température gratuite, ou à faible coût, en particulier le moteur d'une cogénération, une pompe à chaleur, une chaudière biogaz, à bois, des systèmes solaires thermiques, ou autre source d'énergie fatale,
- en sortie de l'échangeur de chaleur entre le liquide de la boucle et la source d'énergie gratuite, un échangeur avec une dérivation du fluide thermique, permettant de finir de réchauffer le liquide de la boucle à une température régulée, pour le deuxième sécheur, comprise entre 40-90°C, de préférence entre 80-90°C
- un échangeur de chaleur liquide-gaz, en particulier eau-air, permettant de chauffer, par le liquide de la boucle, le gaz du deuxième sécheur, mis en mouvement en particulier par un ventilateur de circulation,
- une pompe pour la circulation de l'eau dans la boucle.

Avantageusement, l'installation comporte une régulation comprenant une première boucle de régulation pour assurer une régulation directe de la siccité intermédiaire Si à la sortie du premier sécheur, avec un moyen de calcul et de commande, en particulier un automate, fixant une consigne de siccité intermédiaire Sic à partir de paramètres de fonctionnement.

La régulation peut être prévue pour déterminer une consigne de siccité intermédiaire Sic selon la formule :

$$Sic = (\beta + \alpha * 556) / [(\beta - 89^*\alpha)/Sf + 645^*\alpha/Se + Qo)]$$

dans laquelle :

Se est la siccité d'entrée mesurée, (%)
Sf est la siccité finale prédéterminée, (%)
$\beta$ est un coefficient spécifique du deuxième étage de séchage (6), en kWh/TEE
$\alpha$ un coefficient spécifique du condenseur (8), (sans dimension)
et $Q_0$ une chaleur gratuite éventuellement apportée en kWh/TMS.

L'automate peut piloter une vanne de contrôle du débit, de la pression ou de la température du fluide thermique en fonction de la siccité intermédiaire mesurée, ce contrôle se faisant par la régulation de la pression du fluide thermique dans le cas d'un fluide thermique vapeur ou par la régulation du débit ou de la température (par mélange avec un retour froid du fluide thermique) dans le cas d'un fluide thermique type fluide organique.

L'installation peut comporter une régulation comprenant une boucle de régulation qui contrôle la quantité de chaleur Q3 fournie dans l'échangeur entre le fluide thermique et le liquide de la boucle à basse température.

La boucle de régulation qui contrôle la quantité de chaleur Q3 fournie dans l'échangeur entre le fluide thermique et le liquide de la boucle à basse température peut constituer une deuxième boucle de régulation. La régulation de l'installation peut être assurée uniquement à partir de cette deuxième boucle, en shuntant (ou by passant) la première boucle de régulation.

L'échangeur de chaleur entre le fluide thermique et le liquide de la boucle à basse température peut avoir pour consigne de pilotage la température du liquide de la boucle en sortie de l'échangeur, cette température permettant le fonctionnement efficace de l'échangeur entre le fluide thermique et le gaz du deuxième sécheur, et permettant de s'assurer que le besoin énergétique du deuxième sécheur est équilibré.

L'installation peut comporter une boucle de régulation selon laquelle l'on mesure la chaleur Q3 fournie à l'échangeur par l'intermédiaire d'une mesure de température et de débit en entrée et en sortie de l'échangeur et, si la chaleur Q3 est supérieure à un point de consigne déterminé proche de zéro mais non nul pour avoir toujours une plage de régulation, la régulation modifie le signal de sortie de la première boucle de régulation, de sorte que la chaleur fournie au premier sécheur s'adapte.

La régulation de l'installation, afin d'être dans les conditions optimales pour l'échangeur et le condenseur, peut comporter une troisième boucle de régulation qui utilise comme consigne la température de la boucle d'eau sortie de l'échangeur. La troisième boucle de régulation est avantageusement prévue pour utiliser une température de consigne qui est définie par rapport à un point de consigne dépendant du débit de boue mesuré au niveau de la pompe d'alimentation en boue, et lorsque la température en sortie de l'échangeur entre le liquide de la boucle à basse température et le gaz du deuxième sécheur augmente, la pompe de circulation de la boucle diminue son débit dans une plage acceptable par les composants.

L'invention prévoit d'utiliser une boucle de chaleur à basse température pour le chauffage du deuxième étage. Cette boucle permet de récupérer de l'énergie à basse température fatale ou à bon marché pour le chauffage du deuxième sécheur. En fonction de l'énergie récupérée de cette énergie fatale ou à bon marché, la siccité en sortie du premier étage sera adaptée.

Les technologies de sécheurs comportent aussi souvent une recirculation des boues afin soit de ne pas subir la phase plastique des boues (45 à 65% de siccité) à l'intérieur du sécheur, soit de préparer la boue en amont afin qu'elle soit compatible avec la technologie de séchage.

L'invention n'utilise pas de recirculation des boues et permet donc d'obtenir une exploitabilité du système plus importante.

Ainsi parmi les avantages apportés par le procédé objet de l'invention, vis-à-vis des techniques existantes, on peut citer :

- Une consommation d'énergie inférieure à toutes les technologies : de 400 à 600 kWh/TEE au lieu de 1000 ou 700-800 kWh/TEE

- Une possibilité de diminuer encore cette consommation par l'optimisation de la boucle énergétique en fonction d'énergie gratuite fatale ou à bon marché à basse ou moyenne température disponible.
- Une utilisation sur tout type de boues, en adaptant la technologie de spaghettisation, c'est-à-dire formage en cordons, à la boue rencontrée.
- Une non utilisation d'un procédé de recirculation des boues.

L'invention consiste, mises à part les dispositions exposées ci-dessus, en un certain nombre d'autres dispositions dont il sera plus explicitement question ci après à propos d'exemples de réalisation décrits avec référence aux dessins annexés mais qui ne sont nullement limitatifs. Sur ces dessins :

Fig.1 est un schéma d'une installation mettant en oeuvre le procédé de l'invention.

Fig.2 est un schéma d'un dispositif complémentaire pour l'installation, et

Fig.3 est un diagramme illustrant la variation du ratio : chaleur récupérée/ chaleur utilisée dans le premier étage de séchage, exprimé en % et porté en ordonnée, en fonction de la température en °C des incondensables, à la sortie du premier étage de séchage, portée en abscisse.

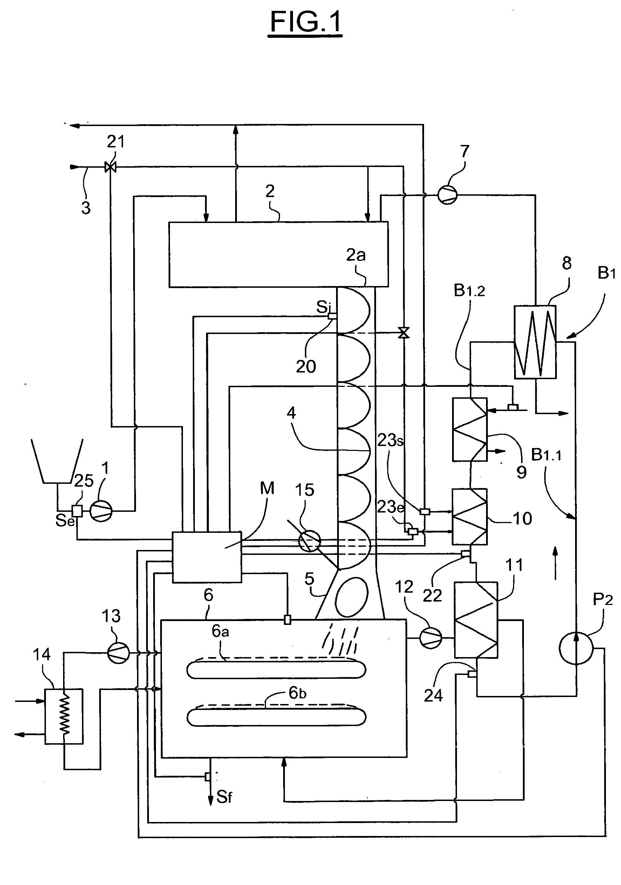

En se reportant à la Fig.1 des dessins, on peut voir qu'une installation selon l'invention comporte une alimentation en boues pâteuses ayant une siccité généralement comprise entre 16 et 30%, assurée par une pompe 1. Les boues rentrent de manière étanche dans un premier sécheur 2 de type indirect. Ce sécheur peut être par exemple de type à couche mince, à disques ou à palettes. Le sécheur à disques sera toutefois préféré.

Ce sécheur indirect 2 est chauffé par un circuit de fluide thermique 3 dont on maîtrise la température d'entrée, la température de sortie, le débit et la pression. Ceci faisant, on maîtrise la quantité d'énergie Q1 fournie au sécheur 2. Le fluide thermique 3 peut être par exemple de la vapeur ou un fluide organique, notamment de l'huile, dont la température peut être de 180°C à 210°C à titre d'exemple non limitatif.

Le sécheur indirect 2 est aussi équipé de moyens de mesure de pression ( non représentés) régulièrement répartis et d'un moyen de mesure (non représenté) du poids du sécheur. Les étanchéités de ce sécheur sont travaillées afin que les entrées d'air soient minimales. De plus pour une optimisation thermique supplémentaire, ce sécheur peut être judicieusement calorifugé.

En sortie du sécheur indirect 2 les boues sont convoyées par une vis 4, logée dans un tube cylindrique, permettant une réduction de l'entrée d'air dans le sécheur, à la sortie de ce sécheur. La vis 4 est en particulier constituée par une vis sans âme. La vis peut être maintenue en température par le réseau de chauffage d'eau.

En sortie de la vis, la boue passe dans un dispositif 5 de formage en cordons, également appelé spaghettiseur, qui permet de créer par enfoncement de la boue dans des trous calibrés un tapis de spaghettis, ou cordons, sur les bandes 6a, 6b d'un sécheur à bandes 6.

Le sécheur à bandes 6 peut être à un ou à plusieurs étages, afin d'optimiser la consommation spécifique de ce sécheur.

Un ventilateur 7 permet de contrôler la pression dans le sécheur 2 afin de maintenir une dépression faible et contrôlée. Ce point est essentiel car d'une part le sécheur 2 ne doit pas se retrouver en surpression pour éviter d'éventuelles fuites d'odeurs mais, en plus, le sécheur 2 ne doit pas se retrouver en trop forte dépression pour éviter des éventuelles entrées d'air dans le circuit d'extraction du ventilateur 7, ce qui modifierait fortement le bilan thermique de l'ensemble.

L'étanchéité du sécheur 2 est donc maîtrisée par une parfaite étanchéité à la fois de l'entrée mais aussi des trappes de visite du sécheur. L'étanchéité de la sortie du sécheur 2 est assurée à la fois :

- Par la sortie des boues en partie basse 2a du sécheur, partie remplie de boue.
- Par la présence de la vis 4 sans âme régulée en vitesse dans cette partie basse. Cette vis 4 permet de contrôler que la quantité de boues dans le sécheur est toujours suffisante pour assurer l'étanchéité. Cette vis est régulée par le poids du sécheur 2.
- Par la mise en dépression de cette vis 4 en sortie de la vis au niveau du spaghettiseur 5 par un ventilateur dédié 15.

Enfin, l'étanchéité est assurée par le respect contrôlé de la pression dans le sécheur 2 grâce au ventilateur 7. Le ventilateur 7, relié par une conduite à la partie extrême haute du sécheur 2, aspire l'air, la vapeur d'eau et les incondensables pour les envoyer, par une conduite, vers un condenseur 8. On maîtrise le débit d'air au niveau du ventilateur 7 sans laisser le vide ( créé par la condensation de la vapeur d'eau sortant du sécheur 2 et envoyée dans le condenseur 8) provoquer de manière incontrôlée l'aspiration dans le sécheur. Les buées aspirées par le ventilateur 7 contiennent de la vapeur d'eau et une quantité d'incondensables dépendant de la qualité des boues et de l'étanchéité mais en général inférieure à 10% en masse, avec une étanchéité bien maîtrisée. Ces incondensables proviennent de la vaporisation d'une partie de composés de la boue et d'une très faible entrée d'air.

Ces buées traversent ensuite le condenseur à eau 8 dans lequel circule l'eau d'une boucle thermique basse température B1, base de la récupération énergétique.

La boucle basse température B1 est constituée des parties suivantes :

- une partie B1.1 à température basse 30-80°C, de préférence 60-70°C en amont du condenseur 8,
- une partie B1.2 moyenne température 40-90°C, de préférence 70-80°C, en sortie du condenseur 8 ;
- en sortie du condenseur, l'eau peut être encore réchauffée dans un échangeur 9 par une source d'énergie basse température « gratuite » comme le moteur d'une cogénération, une pompe à chaleur, une chaudière biogaz, à bois, des systèmes solaires thermiques, ou toute autre source d'énergie fatale ou à bon marché. Il faut noter qu'en fonction des zones de température considérées pour cette source de chaleur gratuite, celle-ci peut être placée en amont du condenseur 8 ou en aval.
- En sortie de l'échangeur 9, un échangeur 10 avec le fluide thermique 3, acheminé par une dérivation de la conduite d'alimentation du fluide 3, permet de finir de réchauffer la boucle à une température régulée pour le sécheur à bande 6, comprise entre 40-90°C, de préférence entre 80-90°C.
- Cette eau chauffée permet ensuite de chauffer par l'intermédiaire d'un échangeur eau-air 11 l'air du sécheur basse température 6 mis en mouvement par l'intermédiaire du ventilateur de circulation 12.
- Une pompe P2, en particulier en sortie de l'échangeur 11, pour la circulation de l'eau dans la boucle B1.

L'aspiration du ventilateur 12 est reliée par une conduite au volume intérieur du sécheur 6, et le refoulement est relié par une conduite à l'entrée de gaz à chauffer de l'échangeur 11. La sortie de l'échangeur 11 pour le gaz réchauffé est reliée au volume intérieur du sécheur 6.

Un ventilateur de circulation 13, dont l'aspiration est reliée par une conduite au volume intérieur du sécheur à bandes 6, et dont le refoulement est relié par une conduite à l'entrée d'un condenseur à eau 14, permet d'éliminer par l'intermédiaire de ce condenseur 14 l'humidité contenue dans le sécheur 6. L'air sortant du condenseur 14 est renvoyé par une conduite dans le sécheur à bandes 6.

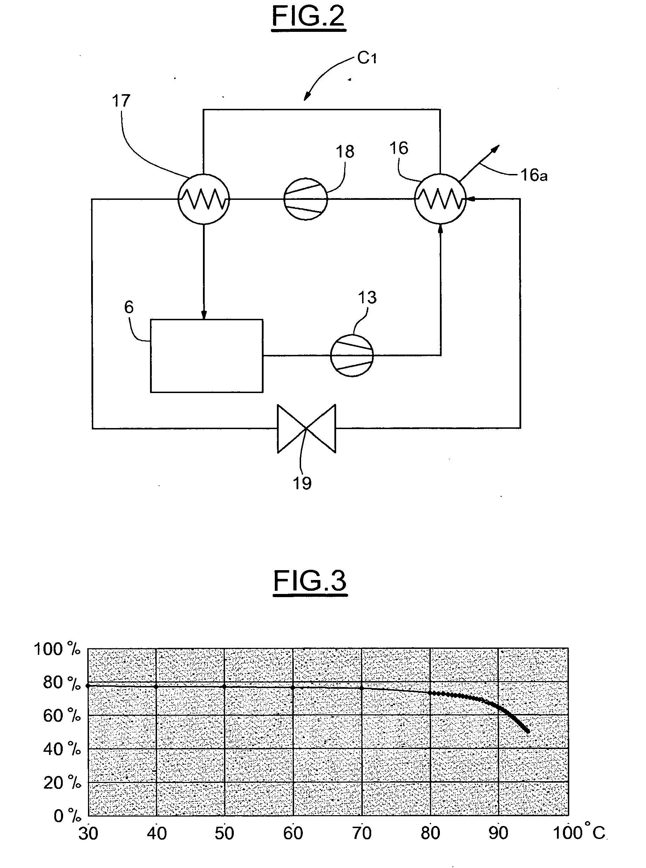

Une autre source de chaleur « gratuite » assimilable à Q0, peut être constituée par une pompe à chaleur C1 sur une partie du circuit du ventilateur de circulation 13 (voir Fig.2). La pompe à chaleur C1 comporte un circuit pour un fluide spécifique qui, arrivant à l'état liquide dans un évaporateur 16 se vaporise en absorbant de la chaleur, puis est comprimé dans un compresseur 18 et revient à l'état liquide dans un condenseur 17 en cédant de la chaleur, puis est détendu dans un détendeur 19, avant de retourner à l'évaporateur 16. L'air chaud et humide sortant du sécheur 6 traverse l'échangeur de chaleur constitué par l'évaporateur 16. La vapeur d'eau de l'air chaud est condensée par l'intermédiaire de l'évaporateur 16 qui récupère l'énergie de condensation. L'eau de condensation est évacuée par une conduite 16a. L'air refroidi sortant de l'évaporateur 16, libéré de la vapeur d'eau condensée, est ensuite réchauffé dans l'échangeur de chaleur du condenseur 17, et est réinjecté dans le sécheur. L'énergie réinjectée dans le condenseur 17 est assimilable à Q0 et doit donc être prise en compte dans le système global du fonctionnement de l'installation.

## EXEMPLES DE FONCTIONNEMENT

### Cas sans énergie gratuite

C'est le cas où aucune énergie gratuite, ou chaleur fatale, n'est fournie à l'échangeur 9. $Q_0$ est alors nulle.

Soit une boue pompée par la pompe 1 ayant les caractéristiques suivantes :

Siccité 20%, Taux de MV (MV = matières volatiles) : 60%,
température 12°C, débit 6245 kg/h (kg/heure)

La puissance énergétique pour sécher cette boue dans le premier sécheur 2 jusqu' à une siccité de 36.5% nécessite 2495 kW de la part du fluide thermique 3 et le débit de buées à travers le ventilateur 7 est de 3195 kg/h dont 290 kg/h d'incondensables. La température de ces buées est de 100°C.

En sortie du condenseur 8, les incondensables et les buées ont une température de 80°C, la quantité d'eau vapeur restante est de 164 kg/h et la puissance échangée est de 1575 kW.

Du côté de la boucle d'eau B1, en entrée B.1.1 de la boucle d'eau avant le condenseur 8, la température est de 72°C, en sortie du condenseur 8, la température de la boucle d'eau est de 86°C et le débit de 96.8 tonnes/h.

On considère qu'aucune chaleur n'est apportée par l'échangeur 9.

L'eau de la boucle est ensuite chauffée à 88.74°C dans l'échangeur 10. La consommation énergétique est de 318kW.

La chaleur fournie au circuit d'air du ventilateur 12 permet de redescendre la température de l'eau de la boucle à 72°C en fournissant au circuit d'air une puissance de 1826 kW. Cette puissance calorifique permet d'évaporer l'eau dans le sécheur à bandes 6 jusqu'à une siccité de 90% avec un ratio de 872kWh/TEE.

La puissance consommée globale du système est de 2495 + 318 = 2813 kW pour une quantité d'eau évaporée de 4997 kg/h.

La consommation spécifique est donc de 563 kWh/TEE.

**Cas avec énergie gratuite**

C'est le cas où une énergie gratuite, ou chaleur fatale, est fournie à l'échangeur 9, $Q_0$ est alors positif.

Prenons le cas d'une énergie gratuite, par exemple moteur de cogénération, permettant de fournir 1000 kW thermique en chauffant l'eau de la boucle thermique à 80°C dans l'échangeur 9.

Pour une boue pompée par la pompe 1 ayant les caractéristiques suivantes : Siccité 20%, Taux de MV : 60%, température 12°C, débit 6245 kg/h, la puissance énergétique pour sécher les boues dans le premier étage ou premier sécheur 2 à une siccité de 33% est de 2184 kW.

Les buées aspirées par le ventilateur 7 représentent 2650 kg/h dont 241 kg/h d'incondensables.

En sortie du condenseur 8, les buées ont une température de 78°C, la puissance fournie au circuit d'eau B1 est de 1353 kW, ce qui représente une élévation de température de 70°C à 78°C de 145.4 tonnes/h.

L'échangeur 9 du moteur de cogénération permet de chauffer l'eau de 78 à 83.9°C. L'échangeur de chaleur 10 du fluide 3 permet de réchauffer l'eau de 83.9 °C à 84.1 °C avec une consommation de 44 kW.

La puissance fournie à l'air est de 2329 kW et permet de sécher les boues à 90% de siccité avec une consommation spécifique de 900 kWh/TEE.

La consommation hors énergie gratuite est alors de 2184 + 44 = 2228 kW pour 4997 kg/h d'eau évaporée soit une consommation spécifique de 445 kWh/TEE.

**Autres applications**

Ce procédé de séchage basse température et l'installation correspondante peuvent être appliqués à tout type de produit pâteux dont la préparation aura permis d'enlever les cailloux ou la trop grande quantité de fibres et de filasses pouvant gêner la spaghettisation.

On peut citer comme produits des pulpes de biomasse : bois, produits de l'agroalimentaire, produits de la transformation animale.

**REGULATION**

On considère maintenant la régulation du procédé et de l'installation de séchage thermique de boues provenant notamment de stations d'épuration d'eaux résiduaires, afin de permettre d'obtenir une très basse consommation énergétique thermique.

La régulation peut être utilisée pour tout procédé et installation de séchage de tout système pâteux que l'on souhaite sécher et qui peut, sous une forme pré-séchée, être mis sous forme de spaghettis.

On définit d'abord d'un point de vue théorique les relations entre les divers constituants de l'installation.

On considère, avec référence à Fig.3, la réaction du condenseur 8 à une variation dans la température de la boucle d'eau B1 et donc sa capacité de refroidissement.

En considérant 1000 kg/h de buées débitées par le ventilateur 7, et en considérant que ces buées arrivent à 100°C et sont constitués de 10% d'incondensables, la quantité d'énergie récupérée dans le condenseur 8, exprimée en % de la chaleur utilisée dans le sécheur 2, en fonction de la température de sortie des incondensables, portée en abscisse, est illustré sur Fig.3.

Si on maîtrise le niveau d'incondensables dans les buées venant du ventilateur 7, ce qui est un des principes de l'invention, la quantité d'énergie est très peu dépendante du niveau de température de sortie des incondensables, pour autant qu'elle ne dépasse pas 83°C : rendement à 83°C : 70% ; rendement à 70°C : 74% ; rendement à 30°C : 78%.

De plus, s'agissant d'un condenseur buées / eau, les coefficients d'échange sont très bons et la température des buées sera surtout dépendante de la température d'entrée du circuit d'eau de la boucle basse température B1.

Dans la plage de température envisagée, on peut considérer que le rendement, exprimé par un coefficient $\alpha$, est de 72% ($\alpha$ = 72% = 0.72 ) et assez constant même avec une faible variation de température de sortie des incondensables.

La partie suivante décrit les bases mathématiques de la régulation de la présente invention

On pose

Se : la siccité en entrée de la boue en 1

Si : la siccité intermédiaire en sortie du sécheur 2 et entrée de la vis 4

Sf la siccité finale en sortie du sécheur à bandes 6.

On considère 1 tonne (1000 kg) de matière sèche en entrée de la pompe 1.

La quantité d'eau évaporée dans le premier étage 2 est de :(1/Se-1/Si).

La quantité de chaleur Q1 nécessaire à cette évaporation est

- légèrement dépendante de la composition de la boue. [ MS (matières sèches) ,MV (matières volatiles) ]
- moyennement dépendante de la siccité d'entrée Se et de la température d'entrée de la boue,
- et fortement dépendante de la quantité d'eau à évaporer donc du facteur :( 1/Se-1/Si).

En effet, en plus de l'évaporation, il s'agit d'effectuer le chauffage de la boue.

Cette quantité de chaleur Q1 peut s'exprimer avec une relative précision par la formule théorique :

$$Q1(Se,Si) = k \ (1/Se-1/Si)(1+0.16 \ [Si(1-Se)/(Si-Se)]$$

Q1 en kWh

Se et Si en %

k étant une constante égale à 556 avec les unités ci-dessus.

Dans la formule théorique, on a supprimé la dépendance à la composition de la boue car elle ne rentre qu'au deuxième ordre ; c'est pourquoi cette formule est valable avec une précision de 5% environ.

La chaleur nécessaire au deuxième séchage 6 est approximée en :

$$Q2(Sf,Si) = \beta * (1/Si -1/Sf)$$

Q2 en kWh

Si et Se en %

$\beta$ en kWh/TEE

Le paramètre $\beta$ correspond à la chaleur spécifique d'évaporation de l'eau dans le deuxième sécheur 6, en kWh/TEE dépendant de la technologie de séchage à bandes choisie et dans lequel on a intégré les pertes thermiques de la boucle de chauffage. Du fait que les boues rentrent chaudes dans l'étage du sécheur à bandes 6, $\beta$ a pour ordre de grandeur [600 -900] kWh/TEE.

La chaleur récupérable sur le condenseur 8 est définie comme $\alpha$Q1 avec $\alpha$ = environ 0.72 comme exposé précédemment.

La chaleur gratuite apportée à l'échangeur 9 est égale à Q0.

La chaleur à apporter par le fluide thermique 3 au sécheur à bandes 6 est égale à : Q3 = Max (Q2 - $\alpha$Q1-Q0 ; 0)

Q3 est la chaleur apportée par le fluide thermique 3 à travers l'échangeur 10.

La chaleur globale apportée est égale

$$Qg = Q1 + Q3 = Q1 + Q2 - \alpha Q1 - Q0, \ \text{tant que Q2 - } \alpha Q1 - Q0 > 0$$

et Q1 ensuite, lorsque Q2 - $\alpha$Q1-Q0 $\leq$ 0.

Ce qui donne :

$$Qg \ (Si) = 556 \ (1- \alpha)*(1/Se-1/Si)(1+0.16 \ [Si(1-Se)/(Si-Se)] \ *1.03 \ +850 \ ((1/Si -1/Sf))-Q0 \qquad \text{tant que Q2 - } \alpha Q1 - Q0 > 0$$

et Qg(Si) = 556 (1/Se-1/Si)(1+0.16 [Si(1-Se)/(Si-Se)] ensuite.

Le but est de minimiser cette fonction de Si. Cette fonction est une fonction décroissante en fonction de Si tant que Q2-$\alpha$Q1-Q0>0 puis une fonction croissante de Si.

Le minimum de cette fonction est obtenu lorsque la totalité de la chaleur du premier étage de séchage 2 est nécessaire et suffisante pour chauffer le deuxième étage 6. Donc lorsque Q2 = $\alpha$Q1+Q0

Cette fonction se résout suivant l'équation [A] ci-dessous.

$$[A] \qquad Si = (\beta + \alpha * 556) / [(\beta -89*\alpha)/Sf + 645*\alpha/Se + Qo)$$

Donc connaissant :

β qui dépend de la technologie employée pour le sécheur à bandes 6
α qui est assez stable en fonction de la température de sortie des incondensables,
Sf qui est fixée
Qo qui est fixé et qui est ramené à la quantité d'énergie pouvant être fournie pour 1 tonne de MS (matières sèches).

on peut déterminer la siccité optimale Si en fonction de Se.

*Application numérique :*

β= 850
α =0.72
Sf = 90%
Qo=0
Se = 20%
Si =39.1%

## *Description de la régulation*

Selon l'invention, la minimisation de la chaleur consommée dans le cadre d'un séchage à deux étages est obtenue par récupération d'énergie haute température du premier étage 2 par condensation de la vapeur pour chauffer une boucle thermique B1 basse température (40-90°C) qui permet elle-même de chauffer le deuxième étage 6 de séchage. La présente invention permet en outre de prendre en compte dans la régulation la mise en place d'un échangeur 9 récupérant de la chaleur fatale d'une autre installation (chaleur Q0).
Selon l'invention la siccité intermédiaire Si est pilotée en fonction de la siccité d'entrée mesurée Se et de la siccité de sortie Sf voulue.
Le principe de la régulation de l'installation et du procédé est donc de fixer, à partir de la mesure de siccité Se et des paramètres de régulation Sf, β,α et Qo, une consigne de siccité de sortie Si. La mesure de la siccité intermédiaire Si est assurée par un capteur de siccité 20 en sortie de sécheur 2.
D'autres régulations viennent compléter et sécuriser la première régulation, assurée par une première boucle de régulation.
L'installation comporte plusieurs boucles de régulation :

La première boucle de régulation a pour but la régulation directe de la siccité intermédiaire Si, sortie sécheur 2. Un moyen de calcul et de commande, en particulier un automate M, est prévu pour fixer une consigne de siccité intermédiaire Sic, notamment à partir de la formule [A] donnée précédemment et de valeurs de paramètres et grandeurs fournies par différents capteurs de mesure.

L'automate M pilote une vanne de contrôle 21 du débit, de la pression ou de la température du fluide thermique en fonction de la siccité intermédiaire Si mesurée par le capteur 20. Ce contrôle peut se faire par la régulation du débit du fluide thermique dans le cas d'un fluide thermique vapeur ou par la régulation du débit ou de la température (par mélange avec le retour froid du fluide thermique) dans le cas d'un fluide thermique type fluide organique.
Les temps de réaction de l'installation étant longs, les contrôles seront faits en adéquation avec ces temps de réaction.
Une deuxième boucle de régulation contrôle la quantité de chaleur Q3 fournie dans l'échangeur 10 par le fluide thermique 3 à l'eau de la boucle B1 basse température. En effet, il a été indiqué précédemment que l'optimum énergétique se trouvait lorsque cette quantité de chaleur Q3 était égale à 0, sans être négative.
Cet échangeur 10 a pour consigne de pilotage la température de la boucle d'eau en sortie de l'échangeur 10, mesurée par un capteur 22 qui transmet l'information à l'automate M. Cette température permet le fonctionnement efficace de l'échangeur 11, et permet de s'assurer que le besoin énergétique du sécheur basse température 6 est bien équilibré.

Si la température en sortie de l'échangeur 10 n'est pas atteinte, c'est que la chaleur prise dans l'échangeur 11 est supérieure à celle fournie par le condenseur 8, donc que l'on ne se trouve plus à l'optimum énergétique.

On mesure donc la chaleur Q3 fournie à l'échangeur 10 par l'intermédiaire d'une mesure de température et de débit en entrée de l'échangeur 10 par un ensemble 23e de capteurs, et en sortie de l'échangeur 10 par un ensemble de capteurs 23s, les capteurs étant reliés à l'automate M pour transmettre les valeurs mesurées.

Si la chaleur Q3 est supérieure à un point de consigne (ou set point) déterminé proche de 0 mais non nul pour avoir toujours une plage de régulation, la deuxième boucle de régulation modifie la sortie de la première boucle de régulation présentée précédemment, de sorte que la chaleur fournie au premier sécheur 2 s'adapte.

On peut aussi effectuer la régulation de l'installation et du système uniquement à partir de la deuxième boucle de régulation en shuntant (by passant) la première boucle de régulation.

Enfin, afin d'être dans les conditions optimales pour l'échangeur 11 et le condenseur 8, une troisième boucle de régulation utilise comme consigne la température de la boucle d'eau sortie de l'échangeur 11, mesurée par un capteur 24 relié à l'automate pour transmettre la valeur de température. Cette température est définie par rapport à un point de consigne (set point) dépendant du débit de boue mesurée au niveau de la pompe 1.

Si la température sortie de l'échangeur 11 augmente, la pompe P2 de circulation de la boucle diminue son débit dans une plage acceptable par les appareils.

Cette triple boucle est auto-stable. En effet si les besoins en chaleur dans le sécheur à bande 6 diminuent, la température en sortie de l'échangeur 11 va augmenter, la pompe de circulation va diminuer le débit dans les échangeurs 11 et 8. Dans le condenseur 8, la différence de température $\Delta T$, entre la sortie et l'entrée du condenseur 8 pour l'eau de la boucle B1 2, va augmenter et la température entrée de l'échangeur 10 va augmenter ce qui va diminuer la quantité de chaleur nécessaire à apporter à l'échangeur 10 par le fluide thermique 3, en dessous de la valeur de consigne.

Dans ce cas, l'automate M va envoyer une consigne à la vanne 21 du sécheur 2 pour diminuer le débit de fluide thermique 3 dans le sécheur 2, ce qui va diminuer la siccité intermédiaire Si et augmenter le besoin en évaporation sur le sécheur à bandes, ce qui va rééquilibrer la température sortie échangeur 11.

De plus, un point de consigne (set point) de température sortie échangeur 11 sera défini par rapport au débit de la pompe 1, fourni à l'automate M par un capteur 25.

En effet, si la pompe 1 diminue son débit, la siccité intermédiaire Si étant régulée par la première boucle de régulation, la quantité absolue de chaleur sur le deuxième sécheur 6 se trouve diminuée. L'échange sur l'échangeur 11 sera donc diminué lui aussi et si la température d'entrée est fixée, la température de sortie va augmenter. Il faut donc diminuer la consigne de débit pour que le refroidissement soit plus important.

Il demeure bien entendu que la présente invention n'est pas limitée aux exemples de mise en oeuvre décrits et/ou représentés mais qu'elle englobe toutes les variantes qui entrent dans le cadre des revendications annexées.

## Revendications

1. Procédé de séchage de matières pâteuses, en particulier de boues de stations d'épuration, comprenant deux étages de séchage, à savoir :

   - un premier étage de séchage (2) de type indirect alimenté en fluide chaud, qui reçoit des boues ayant une siccité Se à l'entrée, et délivre en sortie des boues ayant une siccité intermédiaire Si et de la vapeur d'eau qui est dirigée vers un condenseur (8) pour y réchauffer une boucle de fluide de chauffage, notamment de l'eau;
   - une étape (5) de formage des boues en cordons à la sortie du premier étage,
   - et le deuxième étage de séchage (6) des cordons de boues, chauffées de manière directe à l'aide d'un gaz lui-même chauffé par la boucle de fluide de chauffage, ce deuxième étage (6) donnant en sortie un produit ayant une siccité finale Sf,
   **caractérisé en ce que** la siccité intermédiaire Si est pilotée en fonction de la siccité d'entrée mesurée Se et de la siccité de sortie Sf voulue, pour une consommation minimale de l'énergie globale utilisée pour le séchage, le débit, la pression et/ou la température du fluide chaud (3) alimentant le premier étage de séchage (2) étant ajusté en conséquence.

2. Procédé selon la revendication 1, **caractérisé en ce que** l'on détermine la siccité intermédiaire Si, pour une consommation minimale de l'énergie globale, à partir de la mesure de la siccité d'entrée Se, de la siccité de sortie Sf voulue, et de paramètres comprenant un coefficient $\alpha$ spécifique du condenseur (8), un coefficient $\beta$ spécifique du deuxième étage de séchage (6), et le cas échéant une chaleur gratuite apportée $Q_0$.

3. Procédé selon la revendication 1 ou 2, **caractérisé en ce que** la siccité intermédiaire Si est pilotée de telle sorte que la chaleur récupérée du premier étage à travers le condenseur (8) soit nécessaire et suffisante au séchage du deuxième étage (6).

4.  Procédé selon l'une quelconque des revendications précédentes, **caractérisé en ce que** l'on utilise une boucle (B1) de chaleur à basse température, en particulier comprise entre 30°C et 90°C, pour le chauffage du deuxième étage (6), comportant un liquide, en particulier de l'eau, mis en circulation selon un circuit fermé, traversant le condenseur (8) pour y récupérer la chaleur de la vapeur condensée, et un échangeur de chaleur liquide/gaz (11) pour chauffer le gaz du deuxième étage de séchage (6).

5.  Procédé selon la revendication 4, **caractérisé en ce que** la boucle de chaleur à basse température (B1) comporte un échangeur (10) entre le liquide de la boucle (B1) et une dérivation de fluide thermique (3) du premier étage de séchage (2).

6.  Procédé selon la revendication 4 ou 5, **caractérisé en ce que** la boucle de chaleur à basse température (B1) comporte un échangeur de chaleur (9) pour chauffer le liquide de la boucle par récupération d'énergie à basse température fatale ou bon marché.

7.  Installation pour la mise en oeuvre d'un procédé selon l'une quelconque des revendications précédentes, comprenant :

    - un premier sécheur (2) alimenté en fluide chaud, qui reçoit des boues ayant une siccité Se à l'entrée, et délivre en sortie des boues ayant une siccité intermédiaire Si, et de la vapeur d'eau qui est dirigée vers un condenseur (8) pour y réchauffer un fluide de chauffage pour un deuxième sécheur (6) ;
    - un dispositif (5) de formage des boues en cordons à la sortie du premier sécheur (2),
    - et le deuxième sécheur (6) des cordons de boues à l'aide d'un gaz, notamment de l'air, chauffé au moins en partie par la chaleur extraite du condenseur (8), par l'intermédiaire du fluide de chauffage, ce deuxième sécheur (6) donnant en sortie un produit ayant une siccité finale Sf,
    **caractérisée en ce qu'**elle comporte des moyens (M, 21) pour piloter la siccité intermédiaire Si en fonction de la siccité d'entrée mesurée Se et de la siccité de sortie Sf voulue, pour une consommation minimale de l'énergie globale utilisée pour le séchage, le débit, la pression et/ou la température du fluide chaud (3) alimentant le premier étage de séchage (2) étant ajusté en conséquence.

8.  Installation selon la revendication 7, **caractérisée en ce qu'**elle comporte une boucle (B1) de chaleur à basse température, en particulier comprise entre 30°C et 90°C, pour le chauffage du deuxième étage (6), comportant un liquide, en particulier de l'eau, mis en circulation selon un circuit fermé, traversant le condenseur (8) pour y récupérer la chaleur de la vapeur condensée, et un échangeur de chaleur liquide/gaz (11) pour chauffer le gaz du deuxième étage de séchage (6).

9.  Installation selon la revendication 7 ou 8, **caractérisée en ce qu'**elle comporte un ventilateur (7) à vitesse réglable, dont l'aspiration est reliée à la sortie de vapeur et gaz du premier sécheur (2) et dont le refoulement est relié au condenseur (8), la vitesse du ventilateur étant commandée pour maintenir une dépression faible (de quelques mbar) et contrôlée dans le premier sécheur (2).

10. Installation selon l'une des revendications 7 à 9 , **caractérisée en ce que** le transfert des boues entre la sortie du premier sécheur (2) et le dispositif (5) de formage à l'entrée du deuxième sécheur (6) est assuré par une vis sans âme (4) régulée en vitesse, permettant d'assurer l'étanchéité au gaz en sortie du premier sécheur (2).

11. Installation selon la revendication 8, **caractérisée en ce que** la boucle basse température (B1) à circulation de liquide comprend :

    • une partie (B1.1) à température basse comprise entre 30-80°C, de préférence entre 60-70°C, en amont du condenseur 8,
    • une partie (B1.2) moyenne température comprise entre 40-90°C, de préférence entre 70-80°C, en sortie du condenseur (8) ;
    • un échangeur de chaleur (9) entre le liquide de la boucle (B1) et une source d'énergie gratuite, en aval ou en amont du condenseur (8), pour réchauffer le liquide de la boucle (B1) par une source d'énergie basse température gratuite ou à faible coût, en particulier le moteur d'une cogénération, une pompe à chaleur, une chaudière biogaz, à bois, des systèmes solaires thermiques, ou autre source d'énergie fatale,
    • en sortie de l'échangeur de chaleur (9) entre le liquide de la boucle (B1) et la source d'énergie gratuite, un

11

échangeur (10) avec une dérivation du fluide thermique (3), permettant de finir de réchauffer le liquide de la boucle (B1) à une température régulée, pour le deuxième sécheur (6), comprise entre 40-90°C, de préférence entre 80-90°C
• un échangeur de chaleur (11) liquide-gaz, en particulier eau-air, permettant de chauffer, par le liquide de la boucle (B1), le gaz du deuxième sécheur (6), mis en mouvement en particulier par un ventilateur de circulation 12,
• une pompe (P2) pour la circulation de l'eau dans la boucle (B1).

**12.** Installation selon l'une quelconque des revendications 7 à 11, **caractérisée en ce qu'**elle comporte une régulation comprenant une première boucle de régulation pour assurer une régulation directe de la siccité intermédiaire Si à la sortie du premier sécheur (2), avec un moyen de calcul et de commande, en particulier un automate (M), fixant une consigne de siccité intermédiaire Sic à partir de paramètres de fonctionnement.

**13.** Installation selon la revendication 12, **caractérisée en ce que** la régulation est prévue pour déterminer une consigne de siccité intermédiaire Sic (%) selon la formule :

$$Sic = (\beta + \alpha * 556) / [(\beta - 89 * \alpha)/Sf + 645 * \alpha/Se + Qo)$$

dans laquelle :

Se est la siccité d'entrée mesurée, (%)
Sf est la siccité finale prédéterminée, (%)
$\beta$ est un coefficient spécifique du deuxième étage de séchage (6), kWh/TEE
$\alpha$ un coefficient spécifique du condenseur (8),
et $Q_0$ une chaleur gratuite éventuellement apportée kWh/TMS.

**14.** Installation selon la revendication 12 ou 13, **caractérisée en ce que** l'automate (M) pilote une vanne (21) de contrôle du débit, de la pression ou de la température du fluide thermique (3) en fonction de la siccité intermédiaire mesurée, ce contrôle se faisant par la régulation de la pression du fluide thermique dans le cas d'un fluide thermique vapeur ou par la régulation du débit ou de la température (par mélange avec un retour froid du fluide thermique) dans le cas d'un fluide thermique type fluide organique.

**15.** Installation selon l'une quelconque des revendications 7 à 11, **caractérisée en ce qu'**elle comporte une régulation comprenant une boucle de régulation qui contrôle la quantité de chaleur (Q3) fournie dans l'échangeur (10) entre le fluide thermique et le liquide de la boucle (B1) à basse température.

**16.** Installation selon l'ensemble de la revendication 15 et de l'une quelconque des revendications 12 à 14, **caractérisée en ce que** la boucle de régulation qui contrôle la quantité de chaleur fournie dans l'échangeur (10) entre le fluide thermique et le liquide de la boucle (B1) à basse température constitue une deuxième boucle de régulation, la régulation de l'installation pouvant être assurée uniquement à partir de cette deuxième boucle, en shuntant (ou by passant) la première boucle de régulation.

**17.** Installation selon la revendication 15 ou 16, **caractérisée en ce que** l' échangeur de chaleur (10) entre le fluide thermique et le liquide de la boucle (B1) à basse température a pour consigne de pilotage la température du liquide de la boucle (B1) en sortie de l'échangeur (10), cette température permettant le fonctionnement efficace de l'échangeur (11) entre le fluide thermique et le gaz du deuxième sécheur (6), et permettant de s'assurer que le besoin énergétique du deuxième sécheur (6) est équilibré.

**18.** Installation selon l'une quelconque des revendications 12 à 17, **caractérisée en ce qu'**elle comporte une boucle de régulation selon laquelle l'on mesure la chaleur (Q3) fournie à l'échangeur (10) par l'intermédiaire d'une mesure de température et de débit en entrée et en sortie de l'échangeur (10) et, si la chaleur (Q3) est supérieure à un point de consigne déterminé proche de zéro mais non nul pour avoir toujours une plage de régulation, la régulation modifie le signal de sortie de la première boucle de régulation, de sorte que la chaleur fournie au premier sécheur (2) s'adapte.

**19.** Installation selon l'une quelconque des revendications 12 à 18, **caractérisée en ce que** la régulation, afin d'être dans les conditions optimales pour l'échangeur (11) et le condenseur (8), comporte une troisième boucle de régulation qui utilise comme consigne la température de la boucle d'eau sortie de l'échangeur (11).

20. Installation selon la revendication 19, **caractérisée en ce que** la troisième boucle de régulation est prévue pour utiliser une température de consigne qui est définie par rapport à un point de consigne dépendant du débit de boue mesuré au niveau de la pompe (1) d'alimentation en boue, et lorsque la température en sortie de l'échangeur (11) entre le liquide de la boucle (B1) à basse température et le gaz du deuxième sécheur (6) augmente, la pompe de circulation (P2) de la boucle (B1) diminue son débit dans une plage acceptable par les composants.

**Patentansprüche**

1. Verfahren zum Trocknen von schlammartigen Massen, insbesondere von Schlämmen aus Kläranlagen, mit zwei Trocknungsstufen, nämlich:

   - einer mit heißem Fluid gespeisten ersten Trocknungsstufe (2) vom indirekten Typ, welche Schlämme aufnimmt, die einen Trockenheitsgrad Se am Einlass aufweisen, und welche am Auslass Schlämme mit einem Zwischen-Trockenheitsgrad Si und Wasserdampf ausgibt, welcher zu einem Kondensator (8) geleitet wird, um dort einen Heizfluidkreislauf, insbesondere Wasser, zu erwärmen;
   - einem Schritt (5) des Formens des Schlamms zu Bändern am Auslass der ersten Stufe,
   - und einer zweiten Stufe (6) zum Trocknen der Schlammbänder, die mittels eines Gases direkt erwärmt werden, welches selbst durch den Heizfluidkreislauf erwärmt wird, wobei die zweite Stufe (6) am Auslass ein Produkt mit einem End-Trockenheitsgrad Sf liefert,
   **dadurch gekennzeichnet, dass** der Zwischen-Trockenheitsgrad Si in Abhängigkeit von dem gemessenen Einlass-Trockenheitsgrad Se und dem gewünschten Auslass-Trockenheitsgrad Sf gesteuert wird, um einen minimalen Verbrauch der gesamten, für das Trocknen verwendeten Energie zu erreichen, wobei die Menge, der Druck und/oder die Temperatur des die erste Trocknungsstufe (2) speisenden warmen Fluids (3) entsprechend eingestellt wird.

2. Verfahren nach Anspruch 1, **dadurch gekennzeichnet, dass** der Zwischen-Trockenheitsgrad Si für einen minimalen Verbrauch an Gesamtenergie ausgehend von der Messung des Einlass-Trockenheitsgrads Se, des gewünschten Auslass-Trockenheitsgrads Sf und von Parametern bestimmt wird, welche einen für den Kondensator (8) spezifischen Koeffizienten $\alpha$, einen für die zweite Trocknungsstufe (6) spezifischen Koeffizienten $\beta$ und gegebenenfalls zugeführte kostenlose Wärme $Q_0$ umfassen.

3. Verfahren nach Anspruch 1 oder 2, **dadurch gekennzeichnet, dass** der Zwischen-Trockenheitsgrad Si derart gesteuert wird, dass die über den Kondensator (8) aus der ersten Stufe rückgewonnene Wärme für die Trocknung in der zweiten Stufe (6) erforderlich und ausreichend ist.

4. Verfahren nach einem der vorhergehenden Ansprüche, **dadurch gekennzeichnet, dass** ein Wärmekreislauf (B1) mit niedriger Temperatur, insbesondere zwischen 30°C und 90°C, für das Erwärmen der zweiten Stufe (6) verwendet wird, wobei dieser eine Flüssigkeit, insbesondere Wasser, aufweist, welche in einem geschlossenen Kreislauf zirkuliert, wobei sie den Kondensator (8) durchquert, um dort die Wärme des kondensierten Dampfs rückzugewinnen, und einen Flüssigkeits-/Gas-Wärmetauscher (11) durchquert, um das Gas der zweiten Trocknungsstufe (6) zu erwärmen.

5. Verfahren nach Anspruch 4, **dadurch gekennzeichnet, dass** der Niedertemperatur-Wärmekreislauf (B1) einen Tauscher (10) zwischen der Flüssigkeit des Kreislaufs (B1) und einem Thermofluid-Bypass (3) der ersten Trocknungsstufe (2) aufweist.

6. Verfahren nach Anspruch 4 oder 5, **dadurch gekennzeichnet, dass** der Niedertemperatur-Wärmekreislauf (B1) einen Wärmetauscher (9) zum Erwärmen der Flüssigkeit des Kreislaufs durch Rückgewinnung von überschüssiger oder günstiger Niedertemperaturenergie aufweist.

7. Anlage zur Durchführung eines Verfahrens nach einem der vorhergehenden Ansprüche, mit:

   - einem mit warmem Fluid gespeisten ersten Trockner (2), welcher Schlämme aufnimmt, die einen Trockenheitsgrad Se am Einlass aufweisen, und welcher am Auslass Schlämme mit einem Zwischen-Trockenheitsgrad Si und Wasserdampf ausgibt, welcher zu einem Kondensator (8) geleitet wird, um dort ein Heizfluid für einen zweiten Trockner (6) zu erwärmen;
   - einer Vorrichtung (5) zur Bildung von Schlammbänder am Auslass des ersten Trockners (2),

- und einem zweiten Trockner (6), welcher die Schlammbänder mittels eines Gases, insbesondere Luft, trocknet, welches zumindest teilweise durch die mittels des Heizfluids dem Kondensator (8) entzogene Wärme erwärmt ist, wobei der zweite Trockner (6) am Auslass ein Produkt mit einem End-Trockenheitsgrad Sf liefert, **dadurch gekennzeichnet, dass** sie Einrichtungen (M, 21) aufweist, um den Zwischen-Trockenheitsgrad Si in Abhängigkeit von dem gemessenen Einlass-Trockenheitsgrad Se und dem gewünschten Auslass-Trockenheitsgrad Sf zu steuern, so dass ein minimaler Verbrauch der gesamten, für das Trocknen verwendeten Energie erreicht wird, wobei die Menge, der Druck und/oder die Temperatur des die erste Trocknungsstufe (2) speisenden warmen Fluids (3) entsprechend eingestellt wird.

8. Anlage nach Anspruch 7, **dadurch gekennzeichnet, dass** sie einen Wärmekreislauf (B1) mit niedriger Temperatur, insbesondere zwischen 30°C und 90°C, für das Erwärmen der zweiten Stufe (6) aufweist, wobei dieser eine Flüssigkeit, insbesondere Wasser, aufweist, welche in einem geschlossenen Kreislauf zirkuliert, wobei sie den Kondensator (8) durchquert, um dort die Wärme des kondensierten Dampfs rückzugewinnen, und einen Flüssigkeits-/Gas-Wärmetauscher (11) durchquert, um das Gas der zweiten Trocknungsstufe (6) zu erwärmen.

9. Anlage nach Anspruch 7 oder 8, **dadurch gekennzeichnet, dass** sie einen Lüfter (7) mit regelbarer Drehzahl aufweist, dessen Saugseite mit dem Dampf- und Gasauslass des ersten Trockners (2) verbunden ist und dessen Auslassseite mit dem Kondensator (8) verbunden ist, wobei die Drehzahl des Lüfters derart gesteuert ist, dass ein geringer und kontrollierter Unterdruck (von einigen mbar) in dem ersten Trockner (2) aufrechterhalten bleibt.

10. Anlage nach einem der Ansprüche 7 bis 9, **dadurch gekennzeichnet, dass** die Übergabe von Schlämmen von dem Auslass des ersten Trockners (2) und der Formvorrichtung (5) am Einlass des zweiten Trockners (6) durch eine drehzahlgeregelte Hohlschnecke (4) gewährleistet ist, welche die Gasdichtigkeit am Auslass des ersten Trockners (2) sicherstellt.

11. Anlage nach Anspruch 8, **dadurch gekennzeichnet, dass** der Niedertemperatur-Flüssigkeitskreislauf (B1) aufweist:

   • einen Bereich (B1.1) mit niedriger Temperatur zwischen 30 und 80°C, vorzugsweise zwischen 60 und 70°C, stromaufwärts des Kondensators (8),
   • einen Bereich (B1.2) mit mittlerer Temperatur zwischen 40 und 90°C, vorzugsweise zwischen 70 und 80°C, am Auslass des Kondensators (8),
   • einen Wärmetauscher (9) zwischen der Flüssigkeit des Kreislaufs (B1) und einer Quelle kostenloser Energie, stromabwärts oder stromaufwärts des Kondensators (8), um die Flüssigkeit des Kreislaufs (B1) durch eine Quelle kostenloser oder günstiger Niedertemperatur-Energie, insbesondere durch den Motor einer Kraft-Wärme-Kopplungseinrichtung, eine Wärmepumpe, einen Biogaskessel, einen Holzheizkessel, Solarwärmesysteme, oder eine andere Quelle überschüssiger Energie,
   • am Auslass des Wärmetauschers (9) zwischen der Flüssigkeit des Kreislaufs (B1) und der Quelle kostenloser Energie, einen Tauscher (10) mit einem Wärmefluid-Bypass (3), welcher es ermöglicht, das Erwärmen der Flüssigkeit des Kreislaufs (B1) auf eine eingestellte Temperatur für den zweiten Trockner (6) abzuschließen, welche zwischen 40 und 90°C, vorzugsweise zwischen 80 und 90°C liegt,
   • einen Flüssigkeit/Gas-Wärmetauscher (11), insbesondere Wasser/Luft, der es ermöglicht, durch die Flüssigkeit des Kreislaufs (B1) das Gas des zweiten Trockners (6) zu erwärmen, das insbesondere durch ein Umluftgebläse (12) bewegt wird,
   • eine Pumpe (P2) für die Zirkulation des Wassers in dem Kreislauf (B1).

12. Anlage nach einem der Ansprüche 7 bis 11, **dadurch gekennzeichnet, dass** sie eine Regelung mit einem ersten Regelkreis zum Gewährleisten einer direkten Regelung des Zwischen-Trockenheitsgrades Si am Auslass des ersten Trockners (2) aufweist, mit einer Rechen- und Steuereinrichtung, insbesondere einem Automaten (M), der einen Sollwert für den Zwischen-Trockenheitsgrad Sic auf der Basis von Betriebsparametern festlegt.

13. Anlage nach Anspruch 12, **dadurch gekennzeichnet, dass** die Regelung vorgesehen ist, um einen Sollwert für den Zwischen-Trockenheitsgrad Sic nach der Formel

$$Sic = (\beta + a * 556)/[(\beta - 89*a)/Sf + 645*a/Se + Q_0]$$

zu bestimmen, bei welcher:

Se der gemessene Einlass-Trockenheitsgrad (%) ist,

Sf der vorbestimmte End-Trockenheitsgrad (%) ist,

$\beta$ ein spezifischer Koeffizient der zweiten Trocknungsstufe (6) kWh/TEE ist,

$\alpha$ ein spezifischer Koeffizient des Kondensators (8) ist,

und $Q_0$ eine eventuell zugeführte kostenlose Wärme kWh/TMS ist.

14. Anlage nach Anspruch 12 oder 13, **dadurch gekennzeichnet, dass** der Automat (M) ein Ventil (21) zur Regelung des Durchflusses, des Drucks oder der Temperatur des Wärmefluids (3) in Abhängigkeit von dem gemessenen Zwischen-Trockenheitsgrad steuert, wobei diese Regelung im Falle eines dampfförmigen Wärmefluids durch die Regulierung des Drucks des Wärmefluids oder, im Falle Wärmefluids vom Typ organisches Fluid, durch die Regulierung des Durchflusses oder der Temperatur (durch Mischen mit einem kalten Rücklauf des Wärmefluids) erfolgt.

15. Anlage nach einem der Ansprüche 7 bis 11, **dadurch gekennzeichnet, dass** sie eine Regelung mit einem Regelkreis aufweist, welcher die in dem Tauscher (10) zwischen dem Wärmefluid und der Flüssigkeit in dem Niedertemperatur-Kreislauf (B1) gelieferte Wärmemenge (Q3) regelt.

16. Anlage nach Anspruch 15 in Verbindung mit einem der Ansprüche 12 bis 14, **dadurch gekennzeichnet, dass** der Regelkreis, welcher die in dem Tauscher (10) zwischen dem Wärmefluid und der Flüssigkeit in dem Niedertemperatur-Kreislauf (B1) gelieferte Wärmemenge regelt, einen zweiten Regelkreis bildet, wobei die Regelung der Anlage ausschließlich über diesen zweiten Regelkreis gewährleistet werden kann, indem der erste Regelkreis überbrückt (oder umgangen) wird.

17. Anlage nach Anspruch 15 oder 16, **dadurch gekennzeichnet, dass** der Wärmetauscher (10) zwischen dem Wärmefluid und der Flüssigkeit in dem Niedertemperatur-Kreislauf (B1) als Steuersollwert die Temperatur der Flüssigkeit des Kreislaufs (B1) am Auslass des Tauschers (10) aufweist, wobei diese Temperatur den effizienten Betrieb des Tauschers (11) zwischen dem Wärmefluid und dem Gas des zweiten Trockners (6) gewährleistet, und es ermöglicht, sicherzustellen, dass der Energiebedarf des zweiten Trockners (6) ausgeglichen ist.

18. Anlage nach einem der Ansprüche 12 bis 17, **dadurch gekennzeichnet, dass** sie einen Regelkreis aufweist, durch welchen die dem Tauscher (10) zugeführte Wärme (Q3) mittels einer Messung der Temperatur und des Durchflusses am Einlass und am Auslass des Tauschers (10) gemessen wird, und, wenn die Wärme (Q3) einen gegebenen Sollpunkt übersteigt, der nahe Null, jedoch nicht Null ist, um weiterhin über einen Regelbereich zu verfügen, verändert die Regelung das Ausgangssignal des ersten Regelkreises derart, dass sich die an den ersten Trockner (2) gelieferte Wärme anpasst.

19. Anlage nach einem der Ansprüche 12 bis 18, **dadurch gekennzeichnet, dass** die Regelung, um optimale Bedingungen für den Tauscher (11) und den Kondensator (8) zu bieten, einen dritten Regelkreis aufweist, welcher als Sollwert die Temperatur des Wasserkreislaufs am Ausgang des Tauschers (11) verwendet.

20. Anlage nach Anspruch 19, **dadurch gekennzeichnet, dass** der dritte Regelkreis vorgesehen ist, um eine Solltemperatur zu verwenden, die in Bezug auf einen Sollpunkt definiert ist, welcher von dem an der Schlammzuführpumpe (1) gemessenen Schlammdurchsatz abhängt, und wenn die Temperatur am Auslass des Tauschers (11) zwischen der Flüssigkeit des Niedertemperatur-Kreislaufs (B1) und dem Gas des zweiten Trockners (6) steigt, verringert die Umwälzpumpe (P2) des Kreislaufs (B1) ihren Durchsatz in einem für die Komponenten akzeptablen Maß.

**Claims**

1. A method for drying slurry-like materials, in particular of sludge from wastewater treatment plants, comprising two drying stages, i.e.:

   - a first drying stage (2) of an indirect type, supplied with hot fluid, which receives sludge having an entry dryness Se, and outputs sludge having an intermediate dryness Si and water vapor, which is channeled toward a condenser (8) in order to reheat there a loop for heating fluid, in particular water;
   - a step (5) of forming strings of sludge at the exit from the first stage; and
   - the second stage (6) of drying the strings of sludge heated directly by a gas, which itself is heated by the heating fluid loop, this second stage (6) outputting a product having a final dryness Sf,
   **characterized in that** the intermediate dryness Si is controlled according to the measured entry dryness Se and the desired exit dryness Sf, for minimum consumption of the total energy used for the drying, the flow rate, pressure and/or temperature of the hot fluid (3) supplying the first drying stage (2) being adjusted accordingly.

2. The method as claimed in claim 1, **characterized in that** the intermediate dryness Si is determined for a minimum total energy consumption, on the basis of measurement of the entry dryness Se, the exit dryness Sf desired, and parameters comprising a specific coefficient $\alpha$ of the condenser (8), a specific coefficient $\beta$ of the second drying stage (6), and if applicable free added heat $Q_0$.

3. The method as claimed in claim 1 or 2, **characterized in that** the intermediate dryness Si is controlled such that the heat recuperated from the first stage by means of the condenser (8) is necessary and sufficient for the drying in the second stage (6).

4. The method as claimed in any one of the preceding claims, **characterized in that** a heat loop (B1) at a low temperature is used, which in particular is between 30°C and 90°C, for heating of the second stage (6), comprising a liquid, in particular water, which is circulated according to a closed circuit and passes through the condenser (8), in order to recuperate from there the heat of the condensed steam, and a liquid/gas heat exchanger (11) in order to heat the gas of the second drying stage (6).

5. The method as claimed in claim 4, **characterized in that** the low-temperature heat loop (B1) comprises an exchanger (10) between the liquid in the loop (B1) and a thermal fluid branch (3) of the first drying stage (2).

6. The method as claimed in claim 4 or 5, **characterized in that** the low-temperature heat loop (B1) comprises a heat exchanger (9) in order to heat the liquid in the loop by recuperation of dead or cheap low-temperature energy.

7. A facility for implementation of a method as claimed in any one of the preceding claims, comprising:

   - a first dryer (2) supplied with hot fluid, which receives sludge having an entry dryness Se, and outputs sludge having an intermediate dryness Si and water vapor, which is channeled toward a condenser (8) in order to reheat there a heating fluid for a second dryer (6);
   - a device (5) for forming strings of sludge at the exit from the first dryer (2); and
   - the second dryer (6) for drying the strings of sludge by means of a gas, in particular air, which is heated at least partly by the heat extracted from the condenser (8) by means of the heating fluid, this second dryer (6) outputting a product having a final dryness Sf,
   **characterized in that** it comprises means (M, 21) for controlling the intermediate dryness Si according to the measured entry dryness Se and the desired exit dryness Sf, for minimum consumption of the total energy used for the drying, the flow rate, pressure and/or temperature of the hot fluid (3) supplying the first drying stage (2) being adjusted accordingly.

8. The facility as claimed in claim 7, **characterized in that** it comprises a heat loop (B1) at a low temperature, which in particular is between 30°C and 90°C, for heating of the second stage (6), comprising a liquid, in particular water, which is circulated according to a closed circuit and passes through the condenser (8), in order to recuperate from there the heat of the condensed steam, and a liquid/gas heat exchanger (11) in order to heat the gas of the second drying stage (6).

9. The facility as claimed in claim 7 or 8, **characterized in that** it comprises an adjustablespeed fan (7), the aspiration of which is connected to the steam and gas output of the first dryer (2), and the backflow of which is connected to the condenser (8), the speed of the fan being commanded in order to maintain weak low pressure (of a few mbars) and controlled in the first dryer (2).

10. The facility as claimed in one of claims 7 to 9, **characterized in that** the transfer of the sludge between the exit from the first dryer (2) and the forming device (5) at the entry of the second dryer (6) is assured by a speed-regulated coreless screw (4) which makes it possible to assure the gas tightness at the exit from the first dryer (2).

11. The facility as claimed in claim 8, **characterized in that** the low-temperature loop (B1) for circulation of liquid comprises:

   o a part (B1.1) with a low temperature of between 30 and 80°C, and preferably between 60 and 70°C, upstream of the condenser (8);

o a part (B1.2) with a medium temperature of between 40 and 90°C, and preferably between 70 and 80°C, at the exit from the condenser (8);

o an exchanger (9) of heat between the liquid in the loop (B1) and a free source of energy, downstream or upstream of the condenser (8), for reheating of the liquid in the loop (B1) by a free or low-cost low-temperature source of energy, in particular the motor of a cogeneration unit, a heat pump, a wood or biogas boiler, thermal solar systems, or another source of dead energy;

o at the exit from the exchanger (9) of heat between the liquid in the loop (B1) and the free source of energy, an exchanger (10) with a thermal fluid branch (3) which makes it possible to finish reheating the liquid in the loop (B1) at a regulated temperature, for the second dryer (6), which is between 40 and 90°C, and preferably between 80 and 90°C;

o an exchanger (11) for heat between liquid and gas, and in particular water and air, which makes it possible for the liquid in the loop (B1) to heat the gas of the second dryer (6), which is put into motion in particular by a circulation fan (12);

o a pump (P2) for the circulation of the water in the loop (B1).

12. The facility as claimed in any one of claims 7 to 11, **characterized in that** it comprises regulation comprising a first regulation loop in order to assure direct regulation of the intermediate dryness Si at the exit from the first dryer (2), with a means for calculation and command, and in particular an automaton (M) which establishes an intermediate dryness set point Sic on the basis of operating parameters.

13. The facility as claimed in claim 12, **characterized in that** the regulation is designed to determine an intermediate dryness set point Sic (%) according to the formula:

$$Sic = (\beta+\alpha*556)/[(\beta-89*\alpha)/Sf+645*\alpha/Se+Q_0)]$$

wherein:

Se is the entry dryness measured (%) Sf is the final predetermined dryness (%)
$\beta$ is a specific coefficient of the second drying stage (6), in kWh/TEE
$\alpha$ is a specific coefficient of the condenser (8) and $Q_0$ is free heat which may be added in kWh/TMS.

14. The facility as claimed in claim 12 or 13, **characterized in that** the automaton (M) controls a valve (21) to control the flow rate, pressure or temperature of the thermal fluid (3) according to the intermediate dryness measured, this control being carried out by means of regulation of the pressure of the thermal fluid in the case of a steam thermal fluid, or by regulation of the flow rate or temperature (by mixing with a cold return of the thermal fluid) in the case of a thermal fluid of an organic fluid type.

15. The facility as claimed in any one of claims 7 to 11, **characterized in that** it comprises regulation consisting of a regulation loop which controls the quantity of the heat (Q3) supplied in the exchanger (10) between the thermal fluid and the liquid in the low-temperature loop (B1).

16. The facility as claimed in the combination of claim 15 and any one of claims 12 to 14, **characterized in that** the regulation loop which controls the quantity of heat supplied in the exchanger (10) between the thermal fluid and the liquid in the low-temperature loop (B1) constitutes a second regulation loop, the regulation of the facility being able to be assured solely on the basis of this second loop, by shunting (or by-passing) the first regulation loop.

17. The facility as claimed in claim 15 or 16, **characterized in that** the exchanger of heat (10) between the thermal fluid and the liquid in the low-temperature loop (B1) has as a control set point the temperature of the liquid in the loop (B1) at the exit from the exchanger (10), this temperature permitting the efficient operation of the exchanger (11) between the thermal fluid and the gas of the second dryer (6), and making it possible to ensure that the energy requirement of the second dryer (6) is balanced.

18. The facility as claimed in any one of claims 12 to 17, **characterized in that** it comprises a regulation loop according to which the heat (Q3) supplied to the exchanger (10) is measured by means of measurement of the temperature and flow rate at the entry and exit of the exchanger (10), and, if the heat (Q3) is greater than a specific set point which is close to zero but is not nil, in order always to have a regulation range, the regulation modifies the exit signal of the first regulation loop, such that the heat supplied to the first dryer (2) is adapted.

19. The facility as claimed in any one of claims 12 to 18, **characterized in that**, in order to be in optimum conditions for the exchanger (11) and the condenser (8), the regulation comprises a third regulation loop which uses as a set point the temperature of the water loop at the exit from the exchanger (11).

20. The facility as claimed in claim 19, **characterized in that** the third regulation loop is designed to use a set point temperature which is defined relative to a set point which depends on the flow rate of sludge measured at the sludge supply pump (1), and when the temperature at the exit from the exchanger (11) between the liquid in the low-temperature loop (B1) and the gas of the second dryer (6) increases, the flow rate of the circulation pump (P2) of the loop (B1) decreases to a range which is acceptable for the components.

# FIG.1

## FIG.2

## FIG.3

## RÉFÉRENCES CITÉES DANS LA DESCRIPTION

**Documents brevets cités dans la description**

- EP 0781741 B1